# EUROPÄISCHE PATENTSCHRIFT

(11) **EP 2 562 454 B1**
(45) Veröffentlichungstag und Bekanntmachung des Hinweises auf die Patenterteilung: **09.10.2013**
(21) Anmeldenummer: 11178339.5
(22) Anmeldetag: 22.08.2011
(51) Int. Cl.: F16K 37/00, F16K 31/06

(54) **Mehrwege-Sitzventil mit elektrischer Stellungsüberwachung**
Multi-directional seat valve with electric position monitoring
Soupape à siège à plusieurs voies dotée d'une surveillance de réglage électrique

(43) Veröffentlichungstag der Anmeldung: 27.02.2013
(73) Patentinhaber: HAWE Hydraulik SE, 81673 München (DE)
(72) Erfinder: Heusser, Martin, 81245 München (DE); Zwingler, Engelbert, 85625 Baiern/Antholding (DE)
(74) Vertreter: Grünecker, Kinkeldey, Stockmair & Schwanhäusser

(56) Entgegenhaltungen:
- EP-A2- 1 801 473
- WO-A1-01/16488
- WO-A1-02/086365

## Beschreibung

Die Erfindung betrifft ein Mehrwege-Sitzventil der im Oberbegriff des Patentanspruchs 1 angegebenen Art.

Solche Mehrwege-Sitzventile sind beispielsweise aus der technischen Druckschrift D'7765 der Anmelderin bekannt und werden, insbesondere, in Werkzeugmaschinen-Spannhydrauliken eingesetzt, weil sie kostengünstig, betriebssicher und in der jeweiligen Absperrstellung leckagefrei dicht sind. Maschinenrichtlinien für Werkzeugmaschinen schreiben beispielsweise eine elektrische Stellungsüberwachung vor, um einer übergeordneten Steuervorrichtung beispielsweise zu bestätigen, dass der Magnet das Mehrwege-Sitzventil ordnungsgemäß durchgeschaltet hat.

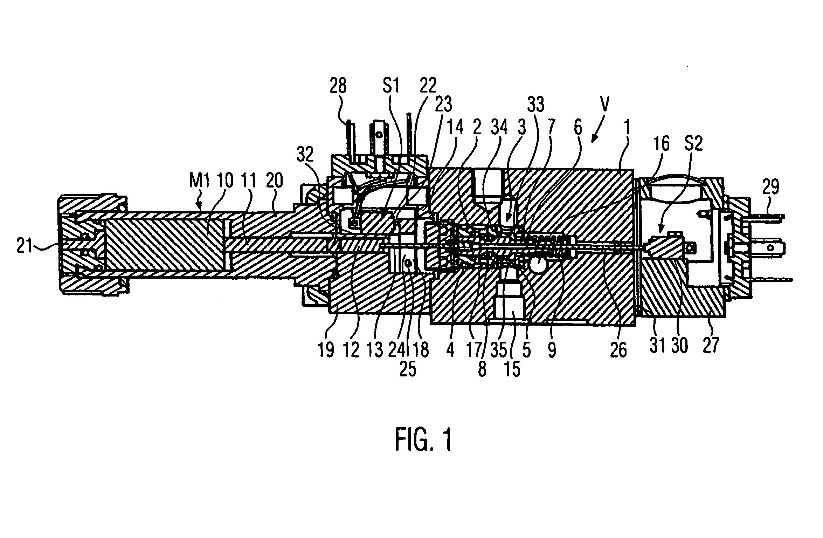

Dazu ist es bekannt, wie beispielsweise in Fig. 1 gezeigt, einen elektrischen Schalter S2 in der Achse des Ventilkegels am dem Magneten abgewandten Ende des Gehäuses zu montieren, der durch einen mit dem Ventilkegel gekoppelten, aus dem Gehäuse abgedichtet nach außen geführten Stößel betätigt wird, wenn der Magnet gegen die Kraft einer den Ventilkegel rückstellenden Ventilfeder voll durchgeschaltet hat. Den Schaltpunkt des elektrischen Schalters exakt auf die Endstellung des Ventilkegels bei durchgeschaltetem Magneten einzustellen, lässt sich nicht mit ausreichender Zuverlässigkeit bewerkstelligen, so dass im Regelfall der Schaltpunkt auf eine Hubstellung geringfügig vor der Endstellung des Ventilkegels eingestellt wird. Die zentrale Anordnung des Schalters und der zentrale Abgriff der Ventilkegelstellung sind bislang nur für die Stellung des Ventilkegels bei durchgeschaltetem Magneten, und auch nur dann möglich, wenn ein Gehäuseende frei ist. Bei einem Mehrwege-Sitzventil mit Schaltmagneten oder Ventilkegel-Betätigungsantrieben an beiden Enden des Gehäuses ist dieses Prinzip nicht realisierbar. Ferner ist es bisher nicht möglich, die andere, beispielsweise durch die Ventilfeder eingestellte Endstellung elektrisch zu überwachen. Moderne Maschinenrichtlinien fordern jedoch zunehmend die Überwachung jeder Endstellung und/oder gegebenenfalls von Zwischenstellungen.

Bei einer aus WO 02/086365 A bekannten Vorrichtung zum visuellen und/oder elektronischen Anzeigen der Position eines Ventilschaftes sind mehrere elektrische Schalter seitlich des Ventilschaftes angeordnet, die über Mitnehmer betätigt werden. Auf den Ventilschaft ist ein Adapter aufgesetzt, der mit einem quer orientierten Mitnehmer weitere mechanische Komponenten bewegt, um an einstellbaren Positionen jeweils einen elektrischen Schalter von mehreren zu aktivieren.

Bei einer aus WO 01/16488 A bekannten, elektrisch betätigten Membranpumpe wird deren Saugendposition durch einen Positionssensor überwacht, um die Pumpe lastorientiert zu steuern.

Aus EP 1 801 473 A ist ein Mehrwege-Sitzventil mit einer 2/3-Wege-Funktion bekannt, dessen Ventilkegel abwechselnd von beiden axialen Gehäuse-Enden durch Ventilantriebe beaufschlagt wird. Der Ventilkegel weist zwischen zwei axial beabstandeten, zueinander weisenden Ventilsitzen in einer Gehäusebohrung zwei axial beabstandete kegelige Sitzflächen auf, die wechselweise mit den Ventilsitzen zusammenwirken. Anschließend an jede Sitzfläche ist mindestens ein Bund vorgesehen, der mit einer Innenwand der Gehäusebohrung einen Drosselspalt innerhalb eines Überdeckungsbereiches definiert, um beim Abheben der jeweiligen Sitzfläche vom Ventilsitz zunächst einen stark gedrosselte Menge strömen zu lassen, und den vollen Strömungsquerschnitt erst nach einem vorbestimmten Öffnungs-Hubweg des Ventilkegels zu öffnen. Eine elektrische Stellungsüberwachung des Ventilkegels ist nicht vorgesehen.

Der Erfindung liegt die Aufgabe zugrunde, ein Mehrwege-Sitzventil der eingangs genannten Art zu schaffen, das universell eine elektrische Stellungsüberwachung in jeder Ventilkegel-Stellung ermöglicht.

Die gestellte Aufgabe wird mit den Merkmalen des Patentanspruchs 1 gelöst.

Da der Schalter gegenüber dem ihn betätigenden Glied seitlich versetzt und durch einen sich vom Glied zur Seite des Schalters erstreckenden Mitnehmer des Glieds indirekt betätigbar ist, ist die elektrische Stellungsüberwachung nicht mehr nur an einem freien Gehäuseende des Mehrwege-Sitzventils möglich, sondern kann jede Stellung des Ventilkegels elektrisch überwacht werden, da der Schalter und die Schalterbetätigung außerhalb des Bewegungsweges des Gliedes platziert sind, so dass über das den Schalter betätigende Glied sogar ein Kraftfluss zum bzw. vom Ventilkegel möglich ist. Der Mitnehmer bildet sozusagen die Bewegung des Ventilkegels für den Schalter seitlich außerhalb der Achse des Ventilkegels bzw. Ventils ab, unabhängig davon, ob über das Glied auch ein Kraftfluss erfolgen muss oder nicht. Dies ermöglicht es, den oder die Schalter mittels des wenigstens einen Zwischengehäuses so in das Mehrwege-Sitzventil zu integrieren, dass jede beliebige Stellung des Ventilkegels überwacht werden kann. Hierbei werden der Mitnehmer im Kraftflussweg vom jeweiligen Magneten zum Ventilkegel zwischen dem Magneten und dem Ventilkegel und der Schalter seitlich außerhalb des Kraftflussweges im Zwischengehäuse angeordnet. Dadurch ist es möglich, beispielsweise auch die Endstellung des Ventilkegels, eingestellt von der Ventilfeder, an der Gehäuseseite des Magneten zu überwachen, oder die von einem weiteren Magneten eingestellte andere Endstellung, die bisher nicht zu überwachen war. Der Schalter und der Mitnehmer sowie der Kraftfluss beeinflussen einander nicht, da der Schalter nur auf die in diesem Bereich stattfindende Bewegung des Mitnehmers anspricht.

Bei einer zweckmäßigen Ausführungsform ist eine mechanische Rastvorrichtung vorgesehen, die den Ventilkegel in beiden Endstellungen festsetzt. Somit ist das Mehrwege-Sitzventil in den Endstellungen selbsthaltend. Da eine Ventilfeder die Rastvorrichtung überwinden dürfte, sind zwei wechselweise schaltbare Magneten für jeweils eine Verstellrichtung des Ventilkegels vorgesehen. Obwohl dadurch an beiden Gehäuseenden kein Platz für zentrale Schalter gegeben ist, kann mit dem seitlich versetzten Schalter im Zwischengehäuse jede der beiden Endstellungen oder eine bestimmte davon überwacht werden.

Hierfür ist entweder zwischen jedem Magneten und dem Gehäuse ein Zwischengehäuse mit einem Mitnehmer und wenigstens einem Schalter vorgesehen, oder ist zwischen einem Magneten und dem Gehäuse ein Zwischengehäuse vorgesehen, das wenigstens einen Mitnehmer und mindestens zwei jeweils eine Endstellung überwachende Schalter enthält. Die Alternativlösung mit dem Zwischengehäuse, das mindestens zwei Schalter enthält, spart Baulänge ein, obwohl zwei Endstellungen des Ventilkegels elektrisch überwacht werden.

Dabei kann es zweckmäßig sein, wenn im Zwischengehäuse zwei oder mehr Schalter entweder zum redundanten Abgreifen derselben Stellung oder zweier oder mehrerer Stellungen des Ventilkegels untergebracht sind. Das redundante Abgreifen derselben Stellung mit mindestens zwei Schaltern steigert bei Ausfall eines Schalters den Sicherheitsstandard. Die zwei oder mehreren Schalter können aber auch wechselweise unterschiedliche Stellungen abgreifen, wobei auch hier für jede abzugreifende Stellung beispielsweise zwei redundant arbeitende Schalter vorgesehen sein können.

Zweckmäßig handelt es sich bei dem jeweiligen Schalter entweder um einen mechanisch oder einen berührungslos auf den Mitnehmer ansprechenden Schalter. Der mechanisch ansprechende Schalter kann ein Druck- oder Kontaktschalter, beispielsweise ein Mikroschalter, sein. Ein berührungslos ansprechender Schalter kann mit einem Näherungsinitiator, einem Hallelement, einem Reed-Element oder optoelektronisch funktionieren, und bietet den Vorteil, kein mechanisches Hemmnis im Kraftflussweg zu erzeugen.

Bei einer zweckmäßigen Ausführungsform ist das sich mit dem Ventilkegel in zumindest einer Verstellrichtung bewegende Glied ein mit der Achse des Ventilkegels fluchtender Stößel, der als Mitnehmer z. B. eine Ringscheibe trägt, vorzugsweise eine geschlitzte, auf dem Stößel festgeklemmte und in Stößellängsrichtung darauf verstellbare Ringscheibe, mit wenigstens einem Schalter-Betätigungselement. Im Falle eines mechanisch ansprechenden Schalters kann das Schalter-Betätigungselement eine Druckfläche an der Ringscheibe sein, die im Schaltpunkt gegen ein Schalterglied drückt. Im Falle eines berührungslos ansprechenden Schalters kann das Schalterbetätigungselement eine Kante des Mitnehmers sein, oder ein daran angebrachter Magnet oder dgl.. Der Stößel ist entweder in beiden Verstellrichtungen mit dem Ventilkegel gekoppelt oder nur in Verstellrichtung zur Schalterbetätigung formschlüssig vom Ventilkegel mitnehmbar, d.h. an sich lose angeordnet. Es kann im ersten Fall der Stößel beispielsweise in den Ventilkegel eingepresst oder durch eine Sicherungsschraube damit verbunden sein, oder auch eingeschraubt oder eingeklebt.

An sich ermöglicht die lösbare Klemmung des Mitnehmers bzw. der Ringscheibe auf dem Stößel die einfache Einjustierung des Schaltpunktes bei fest montiertem Schalter. Alternativ oder additiv kann im Zwischengehäuse eine im Wesentlichen parallel zur Verstellrichtung orientierte Montierfläche zum Festlegen und Justieren des Schalters vorgesehen sein. Auf der Justierfläche kann der Schalter beispielsweise zum Einstellen des Schaltpunktes in Verstellrichtung verlagert werden.

Bei einer zweckmäßigen Ausführungsform sind demselben Mitnehmer an entgegengesetzten Seiten zwei gegensinnig ansprechende Schalter zugeordnet, so dass der Mitnehmer in jeder Endstellung oder kurz vor jeder Endstellung des Ventilkegels einen Schalter betätigt. Mit ein- und demselben Mitnehmer werden so wechselweise die beiden Endstellungen überwacht sind. Alternativ könnte für jeden der Schalter ein eigener Mitnehmer am Glied vorgesehen sein.

Um Baulänge zu sparen, kann der Mitnehmer in Verstellrichtung voneinander beabstandete Schalterbetätigungselemente für z.B. je einen von zwei gegensinnig ansprechenden Schaltern aufweisen, wobei die beiden Schalter in Verstellrichtung sogar einander überlappend montierbar sind.

Bei einer günstigen Ausführungsform kann der Magnet am Zwischengehäuse montiert sein, und ist im Zwischengehäuse ein Zwischenstück verschiebbar geführt, an dessen einem Ende ein Ankerstößel des Magneten und an dessen anderem Ende der den Mitnehmer aufweisende Stößel angreifen. Dies bietet montagetechnische Vorteile und erfordert keine Modifikation des Magneten. Das Zwischenstück überbrückt sozusagen den durch den Einbau des Zwischengehäuses entstehenden Abstand zwischen dem Gehäuse und dem Magneten. Dies schließt nicht aus, den Ankerstößel zu verlängern und direkt am Glied angreifen zu lassen. Um den Schalter vor dem aggressiven Hydraulikmedium zu schützen, kann der Stößel einen im Gehäuseende montierten Gleitdichteinsatz durchsetzen, so dass das Zwischengehäuse im Bereich des Schalters drucklos und trocken ist.

Ferner ist es zweckmäßig, wenn der Ventilkegel und der wenigstens eine Ventilsitz in einer mit Kanälen im Gehäuse kommunizierenden, in das Gehäuse eingesetzten Ventilpatrone angeordnet sind, die, vorzugsweise, im Falle eines selbsthaltenden Mehrwege-Sitzventils auch die Rastvorrichtung enthalten kann. Solche Ventilpatronen sind in unterschiedlichen Abmessungen und Leistungsstufen handelsüblich und kleinbauend, und vor allem universell mit unterschiedlichen Gehäusearten kombinierbar, beispielsweise abhängig davon, ob ein Blockaufbau oder Plattenaufbau gewählt wird. Um kompliziertere Mehrwege-Ventilfunktionen zu erzielen, können in einem Gehäuse mehrere solcher Ventilpatronen angeordnet und beispielsweise jeweils paarweise von einem gemeinsamen Magneten betätigbar sein. Dann kann jeder Ventilpatrone wenigstens eine elektrische Stellungsüberwachung mit seitlich platziertem Schalter zugeordnet werden, oder zumindest einer Ventilpatrone jedes Paares. Hier sind baukastenartig wahlweise Kombinationen von Ventilpatronen mit zwei 2/2-Wege-Funktion und 2/3-Wege-Funktion möglich.

Es kann im Übrigen zweckmäßig sein, wenn seitlich platzierte Schalteranschlüsse unter einer seitlich auf dem Zwischengehäuse montierten Abdeckung mit Kabelanschluss platziert sind.

Eine spezielle Ausführungsform zeichnet sich dadurch aus, dass der Ventilkegel zwei axial beabstandete Sitzflächen jeweils zur Zusammenarbeit mit einem von zwei Ventilsitzen aufweist (2/3-Wege-Ventilfunktion). Hierbei ist es besonders vorteilhaft, wenn zwischen den Sitzflächen wenigstens ein im Durchmesser größerer Bund vorgesehen ist, mit dem kurz nach Abheben der Sitzfläche vom Ventilsitz zunächst nur ein Drosselspalt begrenzt wird, der eine vorbestimmte geringe Durchflussmenge begrenzt, ehe bei weiterem Abheben der Sitzfläche erst der maximale Strömungsquerschnitt freigegeben wird. Dieser Drosselspalt hat vorzugsweise eine Weite entsprechend einer Schieberpassung. Zweckmäßig wird der jeweilige Schaltpunkt des Schalters in diesen sogenannten positiven Überdeckungsbereich nahe bei der Endstellung eingestellt.

Ausführungsformen des Erfindungsgegenstandes werden anhand der Zeichnung erläutert. Es zeigen:
- Fig. 1: einen Längsschnitt einer ersten Ausführungsform eines Mehrwege-Sitzventils mit einem (hier stromlosen) Magneten;
- Fig. 2: einen Längsschnitt einer weiteren Ausführungsform mit zwei Magneten;
- Fig. 3: eine schematische Schnittdarstellung eines Details einer weiteren Ausführungsform, ähnlich der von Fig. 2;
- Fig. 4: eine schematische Schnittdarstellung eines Details einer weiteren Ausführungsform, ähnlich der von Fig. 2; und
- Fig. 5: ein standardisiertes Sinnbild der Ventilfunktion beispielsweise der Ausführungsform von Fig. 2.

Fig. 1 verdeutlicht ein Mehrwege-Sitzventil V mit einem Magneten M1, beispielsweise in einer Werkzeugmaschinen-Spannhydraulik (nicht näher gezeigt). Das Mehrwege-Sitzventil V dient hier beispielsweise zum Steuern einer 2/3-Wege-Funktion und ist mit einer elektrischen Stellungsüberwachung hier mit zwei elektrischen Schaltern S1, S2 ausgestattet.

In einem Gehäuse 1 ist in eine Stufenbohrung 2 eine Ventilpatrone 3 eingesetzt, die in der Stufenbohrung 2 mit mehreren Kanälen 15 (z.B. Druckanschluss), 16 (z.B. Tankanschluss) und 17 (z. B. Verbraucheranschluss) kommuniziert. Die Ventilpatrone 3 umfasst zwei hintereinander liegende Hülseneinsätze 4, 5 und einen Ventilkegel 6, der linear verstellbar ist und mit zwei Sitzflächen 33, 34 wechselseitig mit je einem von zwei Ventilsitzen 7, 8 in den Hülsensätzen 4, 5 zusammenwirkt. Der Magnet M1 verstellt den Ventilkegel 6 bei Bestromung gegen die Kraft einer Ventilfeder 9 nach rechts, während bei stromlosem Magneten M1 die Ventilfeder 9 die dargestellte linke Endstellung des Ventilkegels 6 einstellt.

Bei dieser Ausführungsform in Fig. 1 weist der Ventilkegel 6, als Option, zwischen den Sitzflächen 33, 34 zwei Bunde 35 auf, von denen einer mit einem zylindrischen Innenbohrungsabschnitt im Hülseneinsatz 4 in der gezeigten Endstellung einen Drosselspalt bildet, vorzugsweise mit einer Schieberpassung, um beim anfänglichen Abheben der Sitzfläche 34 vom Sitz 8 nur eine vorbestimmte geringe Leckage innerhalb eines positiven Überdeckungsbereiches aufrecht zu halten, ehe bei weiterer Verstellung des Ventilkegels 6 nach rechts der volle Strömungsquerschnitt zwischen den Kanälen 15 und 17 freigegeben wird. In der gezeigten linken Endstellung des Ventilkegels 6 ist der Kanal 15 mit dem Kanal 16 in Verbindung, und ist zum Kanal 17 leckagefrei abgesperrt.

Alternativ könnte die dann modifizierte Ventilpatrone 3 auch eine 2/2-Wege-Funktion leisten.

Der Magnet M1 weist in Fig. 1 einen Anker 10 auf, der über einen Ankerstößel 11 ein Zwischenstück 12 beaufschlagt, das mit einem als Stößel ausgebildeten Glied 13 in Verbindung steht, das sich bis in den Ventilkegel 6 nach rechts erstreckt, dabei einen Gleitdichtungseinsatz 14 durchsetzt, und im Ventilkegel 6 festgelegt sein kann oder lose ansteht).

Auf dem das Glied 13 bildenden Stößel ist ein Mitnehmer 24 festgelegt, der im Kraftflussweg zwischen dem Magneten M1 und dem Ventilkegel 6 ein Schalterbetätigungselement 23 definiert, beispielsweise eine Druckfläche oder dergleichen. Der Mitnehmer 24 ist hier als Ringscheibe ausgebildet, und weist einen Radialschlitz 18 auf, der über eine Spannschraube 25 das Festklemmen des Mitnehmers 24 in wählbaren Längspositionen auf dem Glied 13 ermöglicht, beispielsweise, um den Schaltpunkt der Betätigung des Schalters S1 einzustellen. Der Schalter S1 ist, wie auch der Mitnehmer 24, in einem Zwischengehäuse 19 untergebracht, das an einem Ende des Gehäuses 1 montiert ist, und an welchem der Magnet M1 mit einem Gehäuse 20 montiert ist, so dass das Zwischengehäuse 19 dazwischen eingeschlossen ist und das Zwischenstück 12 führt. Im Zwischengehäuse 19 ist eine Justierfläche 32 zum Montieren und ggf. Justieren des Schalters S1 vorgesehen.

Der Schalter S1 kann ein mechanischer Schalter sein, z. B. ein Druckschalter oder Mikroschalter, oder kann berührungslos auf die Stellung des Mitnehmers 24 ansprechen. In der gezeigten Ausführungsform weist der Schalter S1 einen Betätiger 22 auf, der mit dem Schalterbetätigungselement 23 des Mitnehmers 24 zusammenwirkt und in der gezeigten Endstellung des Ventilkegels 6 gedrückt ist, so dass der Schalter ab dem Schaltpunkt ein Signal liefert, das über seitlich am Zwischengehäuse 19 platzierte Schalteranschlüsse 28 an eine übergeordnete Steuervorrichtung übertragbar ist. Der Schaltpunkt des Schalters S1 kann, wie erwähnt, entweder durch entsprechende Positionierung des Mitnehmers 24 auf dem Glied 13 und/oder entsprechende Positionierung des Schalters S1 auf der Justierfläche 32 eingestellt werden. Beispielsweise wird der Schaltpunkt so eingestellt, dass nach 0,6 mm plusminus 0,05 mm Hub des Ventilkegels am jeweiligen Magneten der Schalter S1 bzw. S2 betätigt wird.

Im anderen Ende des Ventilkegels 6 ist ein Stößel 26 festgelegt, der sich bis über das rechte Ende des Gehäuses 1 nach außen erstreckt, und dort mit einem weiteren Schalter S2 zusammenwirkt, der zentral auf einer Fläche 30 in einem Endgehäuse 27 montiert ist, das axiale Schalteranschlüsse 29 aufweist. Der Schalter S2 wird an seinem Schaltpunkt bei durchgeschaltetem Magneten M1 und Anlage der Sitzfläche 33 am Ventilsitz 7 vom Stößel 26 betätigt. Der Schaltpunkt des Schalters S2 kann beispielsweise mit dünnen Zwischenblechen 31 zwischen dem Gehäuse 1 und dem Endgehäuse 27 eingestellt werden.

Im Magneten M1 kann eine mit einem Werkzeug zugängliche Notbetätigung 21 vorgesehen sein (Option).

Das Endgehäuse 27 mit dem zentral platzierten Schalter S2 repräsentiert im Übrigen den eingangs erwähnten Stand der Technik bei Mehrwege-Sitzventilen mit elektrischer Stellungsüberwachung nur der Endstellung des Ventilkegels 6 bei durchgeschaltetem Magneten M1.

Hingegen überwacht der Schalter S1, der gegenüber dem Glied 13 seitlich versetzt platziert ist, und vom Glied 13 indirekt über den Mitnehmer 24 betätigt wird, die andere Endstellung des Ventilkegels 6 bei stromlosem Magneten M1 und der durch die Ventilfeder 9 eingestellten anderen Endstellung des Ventilkegels 6. Zweckmäßig ist der Schaltpunkt des Schalters S1 auf eine Hubstellung ganz kurz vor dieser Endstellung eingestellt, und zwar innerhalb eines Bereiches, in welchem der linke Bund 35 den Drosselspalt begrenzt.

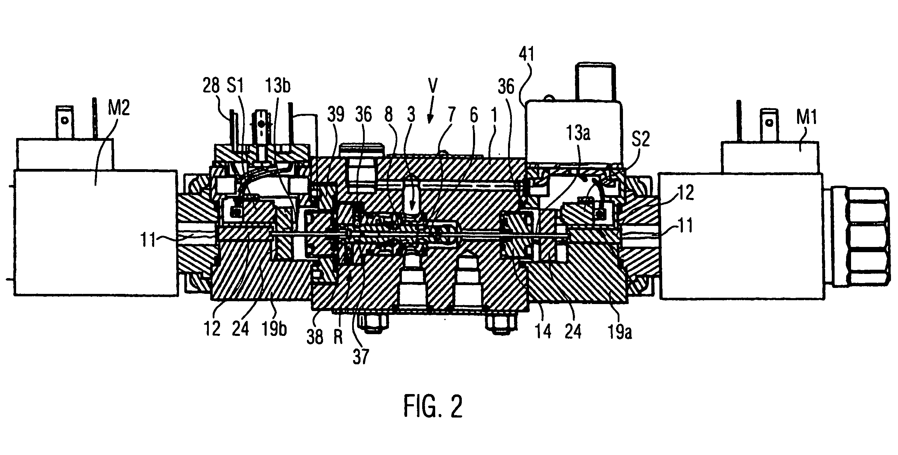

In der Ausführungsform des Mehrwege-Sitzventils V in Fig. 2 ist die Ventilpatrone 3 mit einer mechanischen Rastvorrichtung R ausgestattet, welche den Ventilkegel 6 in jeder der beiden Endstellungen festsetzt. Zu diesem Zweck sind federbelastete Rastkugeln 36, 38 vorgesehen, die in Rastvertiefungen 37 bzw. 39 im Ventilkegel 6 abwechselnd radial eingreifen. In diesem Fall ist eine Ventilfeder gegebenenfalls entbehrlich und sind an beiden Enden des Gehäuses 1 Magneten M1, M2 montiert, und zwar jeweils über ein Zwischengehäuse 19a, 19b, analog zum Zwischengehäuse 19 in Fig. 1. In jedem Zwischengehäuse ist bei der in Fig. 2 gezeigten Ausführungsform mindestens ein Schalter S1 seitlich versetzt gegenüber dem Glied 13a, 13b montiert. Jedes Glied 13a, 13b trägt einen Mitnehmer 24. Der Ventilkegel 6 ist in der linken Endstellung gezeigt, in der er durch die Rastkugel 36 und die Rastvertiefung 37 festgesetzt ist. Die beiden Magneten M1, M2, können stromlos sein. Dennoch hält das Mehrwege-Sitzventil V diese linke Endstellung (selbsthaltende Ventilausführung). Um das Mehrwege-Sitzventil V aus der linken Endstellung des Ventilkegels 6 in die rechte Endstellung umzuschalten, wird der Magnet M2 bestromt, der über den Ankerstößel 11, das Zwischenstück 12 und das Glied 13b zunächst die Haltekraft der Rastvorrichtung R überwindet, und dann den Ventilkegel in die rechte Endstellung bringt, bis die Rastkugel 38 in der Rastvertiefung 39 diese Endstellung festsetzt. Um das Mehrwege-Sitzventil V später wieder umzuschalten, wird der rechte Magnet M1 bestromt.

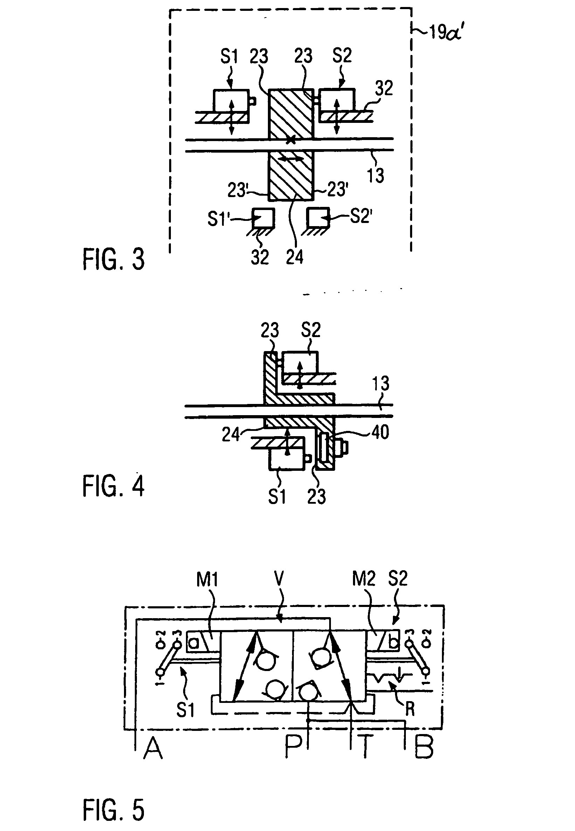

Der Schalter S2 überwacht die rechte Endstellung des Ventilkegels 6, während der Schalter S1 (gerade betätigt) die linke Endstellung überwacht. An jedem Zwischengehäuse 19a, 19b können die Schalteranschlüsse 28 durch eine seitlich angebrachte Abdeckung 41 mit Kabeldurchführung abgeschirmt sein. Der weitere Aufbau in Fig. 2 entspricht dem anhand Fig. 1 erläuterten Aufbau. Das in Fig. 2 gezeigte Mehrwege-Sitzventil V hat beispielsweise eine 2/3-Wege-Funktion entsprechend der Darstellung in Fig. 5.

Ein Druckanschluss P ist außerhalb des Mehrwege-Sitzventils V in Fig. 5 permanent mit einem Verbraucheranschluss B verbunden, während ein Verbraucheranschluss A wahlweise entweder mit dem Druckanschluss P (linke Schaltstellung) oder mit einem Tankanschluss T (rechte Schaltstellung) verbunden wird. In der linken Schaltstellung bleibt weiterhin der Verbraucheranschluss B mit dem Druckanschluss P verbunden, während gleichzeitig auch der Verbraucheranschluss A mit dem Druckanschluss P verbunden und vom Tankanschluss T separiert ist. Die Bestromungen der Magneten M1, M2 sind mit a und b angedeutet. Die beiden Schalter S1, S2 haben ihre Schaltstellungen mit 1, 2, 3 angedeutet. Die mechanische Rastvorrichtung R ist ebenfalls sinnbildlich dargestellt.

In Fig. 1 und Fig. 2 könnten in jedem Zwischengehäuse 19, 19a, 19b redundanten zum Überwachen der jeweiligen Endstellung mehr als ein Schalter S1 bzw. S2 vorgesehen sein, für den Fall des Ausfalls eines Schalters. Diese zwei oder mehr Schalter würden dann im Wesentlichen am gleichen Schaltpunkt und gleichzeitig betätigt.

Fig. 3 verdeutlicht eine Detailvariante eines Zwischengehäuses 19a', beispielsweise entsprechend dem Zwischengehäuse 19a in Fig. 2, wobei in Fig. 3 zwei oder mehrere Schalter S1, S2, die gegensinnig ansprechen und gegensinnig angeordnet sind, wechselseitig vom gemeinsamen Mitnehmer 24 über dessen Schalterbetätigungselemente 23 betätigt werden. In diesem Fall könnte das in Fig. 2 links gezeigte Zwischengehäuse 19b entfallen, weil die beiden Schalter S1, S2 wechselweise jeweils eine Endstellung überwachen.

Ferner ist in Fig. 3 als Variante angedeutet, dass Schalter S1', S2', berührungslos ansprechen, beispielsweise auf die die jeweiligen Schalterbetätigungselemente 23' definierenden Randkanten des Mitnehmers 24. Dort könnten beispielsweise auch Permanentmagneten angebracht sein, auf deren Bewegungen bzw. Positionen die Schalter S1', S2' ansprechen. Der Doppelpfeil in Fig. 3 deutet an, dass zum Einstellen des Schaltpunktes der mit dem Glied 13 verbundene Mitnehmer 24, beispielsweise nach Lösen der in Fig. 1 angedeuteten Klemmverbindung, entlang des Glieds 13 verstellt werden kann.

Fig. 4 verdeutlicht eine weitere Detailvariante, mit der Baulänge eingespart wird, da der Mitnehmer 24 in Längsrichtung des Gliedes 13 beabstandete Schalterbetätigungselemente 23 aufweist, die je einem von zwei gegensinnig angeordneten und gegensinnig ansprechenden Schaltern S1, S2 zugeordnet sind, die dank der Versetzung zwischen den Schalterbetätigungselementen 23 einander sogar überlappend eingebaut sein können.

Trotz des gemeinsamen Mitnehmers 24 (es könnten auch zwei getrennte, axial versetzte, Mitnehmer vorgesehen sein, von denen ein jeder individuell entlang des Glieds 13 verstellbar und festsetzbar ist) kann das Schalterbetätigungselement 23 an einer Fläche angeordnet sein, die mittels einer Stellschraube 40 relativ zum Mitnehmer 24 verstellbar ist, so dass die Schaltpunkte der beiden Schalter S1, S2 individuell einstellbar sind.

## Patentansprüche

1. Mehrwege-Sitzventil (V) mit elektrischer Stellungsüberwachung, insbesondere in einer Werkzeugmaschinen-Spannhydraulik, mit wenigstens einem in einem Gehäuse (1) relativ zu wenigstens einem Ventilsitz (7, 8) linear hin- und herverstellbare Ventilkegel (6), wenigstens einem am Gehäuse (1) montierten Magneten (M, M1, M2) für jeweils eine Verstellrichtung des Ventilkegels (6), einer mechanischen linearen und zentralen Verbindung (11, 12, 13, 13a, 13b) zwischen dem jeweiligen Magneten und dem Ventilkegel (6), und wenigstens einem elektrischen Schalter (S1, S2, S1', S2') zum Abgreifen wenigstens einer Stellung des Ventilkegels (6), wobei der Schalter (S1, S2, S1', S2') durch ein mit dem Ventilkegel (6) bewegbares Glied (13, 13a, 13b), betätigbar ist, **dadurch gekennzeichnet, dass** der jeweilige Schalter (S1, S2, S1', S2') gegenüber dem Glied (13) seitlich versetzt und durch einen sich vom Glied (13) zur Seite des Schalters erstreckenden Mitnehmer (24) des Glieds (13) betätigbar ist., und dass der Schalter (S1, S2, S1', S2') und der Mitnehmer (24) im Kraftflussweg vom jeweiligen Magneten (M1, M2) zum Ventilkegel (6) zwischen dem Magneten und dem Ventilkegel in einem zwischen dem Magneten und dem Gehäuse (1) montierten Zwischengehäuse (19, 19a, 19b, 19a') angeordnet sind.

2. Mehrwege-Sitzventil nach Anspruch 1, **dadurch gekennzeichnet, dass** eine mechanische Rastvorrichtung (R) vorgesehen ist, die den Ventilkegel (6) in beiden Endstellungen festsetzt, dass zwei wechselweise schaltbare Magneten (M1, M2) für jeweils eine Verstellrichtung des Ventilkegels (6) vorgesehen sind, und dass entweder zwischen jedem Magneten und dem Gehäuse ein Zwischengehäuse (19a, 19b) mit einem Mitnehmer (24) und wenigstens einem Schalter (S1, S2, S1', S2') oder zwischen einem Magneten und dem Gehäuse ein Zwischengehäuse (19a') mit wenigstens einem Mitnehmer (24) und mindestens zwei Schaltern (S1, S2, S1', S2') montiert ist.

3. Mehrwegesitzventil nach Anspruch 2, **dadurch gekennzeichnet, dass** im Zwischengehäuse (19a, 19a') zwei oder mehr Schalter (S1, S2, S1', S2') entweder zum redundanten Abgreifen derselben Stellung des Ventilkegels (6) oder zweier oder mehrerer Stellungen des Ventilkegels (6) untergebracht sind.

4. Mehrwege-Sitzventil nach wenigstens einem der vorhergehenden Ansprüche, **gekennzeichnet durch** einen mechanisch oder berührungslos auf den Mitnehmer (24) ansprechenden elektrischen Schalter (S1, S2, S1', S2').

5. Mehrwege-Sitzventil nach Anspruch 1, **dadurch gekennzeichnet, dass** das Glied (13, 13a, 13b) ein mit der Achse des Ventilkegels (6) fluchtender Stößel ist, der als Mitnehmer (24) eine Ringscheibe trägt, vorzugsweise eine geschlitzte, auf den Stößel geklemmte und in Stößellängsrichtung verstellbare Ringscheibe mit wenigstens einem Schalterbetätigungselement (23), und **dass** der Stößel entweder in beiden Verstellrichtungen mit dem Ventilkegel (6) gekoppelt oder nur in Verstellrichtung zur durch Schalterbetätigung formschlüssig vom Ventilkegel (6) oder Magneten (M1, M2) mitnehmbar ist.

6. Mehrwege-Sitzventil nach Anspruch 2 oder 3, **dadurch gekennzeichnet, dass** im Zwischengehäuse (19, 19a, 19b, 19a') eine im Wesentlichen parallel zur Verstellrichtung orientierte Montierfläche (32) zum Festlegen und Einjustieren des Schalters (S1, S2, S1', S2') vorgesehen ist.

7. Mehrwege-Sitzventil nach wenigstens einem der vorhergehenden Ansprüche, **dadurch gekennzeichnet, dass** demselben Mitnehmer (24) an entgegengesetzten Seiten zwei gegensinnig ansprechende Schalter (S1, S2, S1', S2') zugeordnet sind.

8. Mehrwege-Sitzventil nach wenigstens einem der vorhergehenden Ansprüche, **dadurch gekennzeichnet, dass** der Mitnehmer (24) in Verstellrichtung voneinander beabstandete gegensinnige Schalterbetätigungselemente (23) für je wenigstens einen Schalter (S1, S2) aufweist, und dass die beiden Schalter (S1, S2) in Verstellrichtung einander überlappend montiert sind.

9. Mehrwege-Sitzventil nach Anspruch 2 oder 3, **dadurch gekennzeichnet, dass** der Magnet (M1, M2) am Zwischengehäuse (19, 19a, 19b, 19a') montiert ist, und dass im Zwischengehäuse ein Zwischenstück (12) verschiebbar geführt ist, an dessen einem Ende ein Ankerstößel (11) des Magneten (M1, M2) und an dessen anderem Ende der den Mitnehmer (24) aufweisende Stößel des Glieds (13) angreifen.

10. Mehrwege-Sitzventil nach Anspruch 2, **dadurch gekennzeichnet, dass** der Ventilkegel (6) und der wenigstens eine Ventilsitz (7, 8) in einer mit Kanälen (15, 16, 17) im Gehäuse (1) kommunizierenden, in das Gehäuse (1) eingesetzten Ventilpatrone (3) angeordnet sind, die, vorzugsweise, auch die Rastvorrichtung (R) enthält.

11. Mehrwege-Sitzventil nach Anspruch 2, **dadurch gekennzeichnet, dass** unter einer seitlich auf dem Zwischengehäuse (19a) montierten Abdeckung (41) mit Kabelanschluss Schalteranschlüsse (28) platziert sind.

12. Mehrwege-Sitzventil nach wenigstens einem der vorhergehenden Ansprüche, **dadurch gekennzeichnet, dass** der Ventilkegel (6) zwei axial beabstandete Sitzflächen (33, 34) jeweils zur Zusammenarbeit mit einem von zwei Ventilsitzen (7, 8) sowie dazwischen wenigstens einen im Durchmesser größeren Bund (35) zur Begrenzung eines Drosselspalts aufweist, vorzugsweise eines Drosselspalts mit Schieberpassungs-Weite.

## Claims

1. Multi-directional seat valve (V) with electric position monitoring, in particular in a clamping hydraulic of a tooling machine clamping, comprising at least one valve cone (6) which is linearly adjustable back and forth in a housing (1) relative to at least one valve seat (7, 8), at least one solenoid (M, M1, M2) mounted at the housing (1) for a respective adjusting direction of the valve cone (6), a mechanic linear and central connection (11, 12, 13, 13a, 13b) between the respective solenoid and the valve cone (6), and at least one electric switch (S1, S2, S1', S2') for detecting at least one position of the valve cone (6), wherein the switch (S1, S2, S1', S2') is actuable by a member (13, 13a, 13b), commonly moveable with the valve cone (6), **characterised in that** the respective switch (S1, S2, S1', S2') is offset sidewardly with respect to the member (13) and is actuable by a retainer (24) of the member (13) which retainer extends to the sides of the switch, and that the switch (S1, S2, S1', S2') and the retainer (24) are arranged in the force transmission path from the respective solenoid (M1, M2) to the valve cone (6) and between the solenoid and the valve cone (6) in an intermediate housing (19, 19a, 19b, 19a') mounted between the solenoid and the housing (1).

2. Multi-directional seat valve according to claim 1, **characterised in that** a mechanical ratcheting device (R) is provided for securing the valve cone (6) in both its end positions, that two alternatively switchable solenoids (M1, M2) for a respective adjusting direction of the valve cone (6) are provided, and that either between each solenoid and the housing an intermediate housing (19a, 19b) having a retainer (24) and at least one switch (S1, S2, S1', S2') or between one solenoid and the housing (1) intermediate housing (19a') having at least one retainer (24) and at least two switches (S1, S2, S1', S2') is mounted.

3. Multi-directional seat valve according to claim 2, **characterised in that** two or more switches (S1, S2, S1', S2') are accommodated in the intermediate housing (19a, 19a') either for redundantly detecting the same position of the valve cone (6) or for detecting two or more positions of the valve cone (6).

4. Multi-directional seat valve according to at least one of the preceding claims, **characterised by** an electric switch (S1, S2, S1', S2') responding either mechanically or without contact to the retainer (24).

5. Multi-directional seat valve according to claim 1, **characterised in that** the member (13, 13a, 13b) is a plunger aligned with the axis of the valve cone (6), which plunger carries a ring disk defining the retainer (24), preferably a ring disk having at least one switch actuating element (23) and being slotted and clamped onto the plunger, and that the plunger either is coupled in both adjustment directions with the valve cone (6) or can be moved with a form fit from the valve cone (6) or the solenoid (M1, M2) only in adjustment direction for actuating the switch.

6. Multi-directional seat valve according to claim 2 or 3, **characterised in that** a mounting surface (32) for securing and adjusting the switch (S1, S2, S1', S2') is provided in the intermediate housing (19, 19a, 19b, 19a'), which mounting surface (32) is oriented substantially parallel to the adjustment direction.

7. Multi-directional seat valve according to at least one of the preceding claims, **characterised in that** two oppositely responding switches (S1, S2, S1', S2') are associated to the same retainer (24) at opposite sides thereof.

8. Multi-directional seat valve according to at least one of the preceding claims, **characterised in that** the retainer (24) has switch actuating elements (23) for respectively at least one switch (S1, S2) which are spaced apart in adjustment direction and which are acting in opposite directions, and that both switches S1, S2) are mounted such that they overlap each other in adjustment direction.

9. Multi-directional seat valve according to claim 2 or 3, **characterised in that** the solenoid (M1, M2) is mounted at the intermediate housing (19, 19a, 19b, 19a'), and that an intermediate piece (12) is slidably guided in the intermediate housing, and an armature plunger (11) of the solenoid (M1, M2) engages at one end of the intermediate piece (12), while the plunger of the member (13) having the retainer (24) engages at the other end.

10. Multi-directional seat valve according to claim 2, **characterised in that** the valve cone (6) and the at least one valve seat (7, 8) are arranged in a valve cartridge (3) which is inserted in the housing (1) and communicates with channels (15, 16, 17) in the housing (1), which valve cartridge (3), preferably, also accommodates the ratcheting device (R).

11. Multi-directional seat valve according to claim 2, **characterised in that** switch terminals (28) are placed underneath a cover (48) having a cable connection and being mounted sidewards on the intermediate housing (19a).

12. Multi-directional seat valve according to at least one of the preceding claims, **characterised in that** the valve cone (6) has two axially spaced apart seat surfaces (33, 34) respectively for co-action with one of two valve seats (7, 8) as well in-between at least one land (35) having a larger diameter for bounding a throttling gap, preferably a throttling gap having a slider tolerance width.

## Revendications

1. Vanne ou soupape à siège à voies multiples (V) avec un système de surveillance électrique de position, notamment dans une installation hydraulique de serrage de machine-outil, comprenant au moins un cône d'obturation de vanne (6) pouvant être déplacé linéairement en va-et-vient dans un carter (1) par rapport à au moins un siège de vanne (7, 8), et comprenant également au moins un aimant (M, M1, M2) monté sur le carter (1), chacun destiné à une direction de déplacement du cône d'obturation de vanne (6), une liaison mécanique linéaire centrale (11, 12, 13, 13a, 13b) entre l'aimant respectif et le cône d'obturation de vanne (6), et au moins un commutateur électrique (S1, S2, S1', S2') pour détecter au moins une position du cône d'obturation de vanne (6), le commutateur (S1, S2, S1', S2') pouvant être actionné par l'intermédiaire d'un organe (13, 13a, 13b) susceptible d'être déplacé par le cône d'obturation de vanne (6), **caractérisée en ce que** le commutateur respectif (S1, S2, S1', S2') est décalé latéralement par rapport à l'organe (13) et peut être actionné par un entraîneur (24) de l'organe (13), qui s'étend à partir de l'organe (13) vers le côté du commutateur, et **en ce que** le commutateur (S1, S2, S1', S2') et l'entraîneur (24) sont agencés dans le parcours du flux d'effort de l'aimant respectif (M1, M2) vers le cône d'obturation de vanne (6), entre l'aimant et le cône d'obturation de vanne, dans un carter intermédiaire (19, 19a, 19b, 19a') monté entre l'aimant et le carter (1).

2. Vanne à siège à voies multiples selon la revendication 1, **caractérisée en ce qu'**il est prévu un dispositif d'encliquetage mécanique (R), qui fixe le cône d'obturation de vanne (6) dans les deux positions d'extrémité, **en ce que** sont prévus deux aimants (M1, M2) pouvant être commandés alternativement pour respectivement une direction de déplacement du cône d'obturation de vanne (6), et **en ce qu'**entre chaque aimant et le carter est monté un carter intermédiaire (19a, 19b) avec un entraîneur (24) et au moins un commutateur (S1, S2, S1', S2'), ou bien qu'entre un aimant et le carter est monté un carter intermédiaire (19a') avec au moins un entraîneur (24) et au moins deux commutateurs (S1, S2, S1', S2').

3. Vanne à siège à voies multiples selon la revendication 2, **caractérisée en ce que** dans le carter intermédiaire (19a, 19a') sont logés deux commutateurs (S1, S2, S1', S2') ou davantage, soit pour la détection redondante de la même position du cône d'obturation de vanne (6), soit pour la détection de deux positions ou davantage du cône d'obturation de vanne (6).

4. Vanne à siège à voies multiples selon l'une au moins des revendications précédentes, **caractérisée par** un commutateur électrique (S1, S2, S1', S2') réagissant mécaniquement ou sans contact à l'entraîneur (24).

5. Vanne à siège à voies multiples selon la revendication 1, **caractérisée en ce que** l'organe (13, 13a, 13b) est un poussoir aligné avec l'axe du cône d'obturation de vanne (6), qui porte, en guise d'entraîneur (24), un disque annulaire, de préférence un disque annulaire fendu, serré sur le poussoir et réglable dans la direction longitudinale du poussoir, et comportant au moins un élément d'actionnement de commutateur (23), et **en ce que** le poussoir, soit est couplé au cône d'obturation de vanne (6) dans les deux directions de déplacement, soit peut uniquement être entraîné, par complémentarité de formes, par le cône d'obturation de vanne (6) ou l'aimant (M1, M2), dans la direction de déplacement pour l'actionnement du commutateur.

6. Vanne à siège à voies multiples selon la revendication 2 ou la revendication 3, **caractérisée en ce que** dans le carter intermédiaire (19, 19a, 19b, 19a') est prévue une surface de montage (32) orientée sensiblement de manière parallèle à la direction de déplacement, pour la fixation et l'ajustement du commutateur (S1, S2, S1', S2').

7. Vanne à siège à voies multiples selon l'une au moins des revendications précédentes, **caractérisée en ce qu'**au même entraîneur (24) sont associés, sur des côtés opposés, deux commutateurs (S1, S2, S1', S2') réagissant dans des sens opposés.

8. Vanne à siège à voies multiples selon l'une au moins des revendications précédentes, **caractérisée en ce que** l'entraîneur (24) présente des éléments d'actionnement de commutateurs (23) opposés, espacés mutuellement dans la direction de déplacement, chacun pour au moins un commutateur (S1, S2), et **en ce que** les deux commutateurs (S1, S2) sont montés de manière à se chevaucher mutuellement dans la direction de déplacement.

9. Vanne à siège à voies multiples selon la revendication 2 ou la revendication 3, **caractérisée en ce que** l'aimant (M1, M2) est monté sur le carter intermédiaire (19, 19a, 19b, 19a'), et **en ce que** dans le carter intermédiaire est guidée de manière coulissante, une pièce intercalaire (12), à l'une des extrémité de laquelle agit un poussoir d'armature mobile (11) de l'aimant (M1, M2), et à l'autre extrémité de laquelle agit le poussoir de l'organe (13), qui présente l'entraîneur (24).

10. Vanne à siège à voies multiples selon la revendication 2, **caractérisée en ce que** le cône d'obturation de vanne (6) et ledit au moins un siège de vanne (7, 8) sont agencés dans une cartouche de vanne (3), qui est insérée dans le carter (1) et est en communication avec des canaux (15, 16, 17) dans le carter (1), et qui, de préférence, renferme également le dispositif d'encliquetage (R).

11. Vanne à siège à voies multiples selon la revendication 2, **caractérisée en ce que** sous un capuchon de couverture (41) à raccord de câble, monté latéralement sur le carter intermédiaire (19a), sont placés des éléments de connexion de commutateur (28).

12. Vanne à siège à voies multiples selon l'une au moins des revendications précédentes, **caractérisée en ce que** le cône d'obturation de vanne (6) présente deux surfaces de siège (33, 34) espacées axialement et prévues chacune pour interagir avec l'un de deux sièges de vanne (7, 8), ainsi qu'entre les deux, au moins un collet (35) de diamètre plus grand, destiné à délimiter un interstice d'étranglement, de préférence un interstice d'étranglement d'une largeur correspondant à un ajustement de tiroir coulissant.
